# EUROPEAN PATENT APPLICATION

(11) **EP 4 403 597 A1**
(43) Date of publication of application: **24.07.2024**
(21) Application number: 22867459.4
(22) Date of filing: 12.09.2022
(51) Int. Cl.: C08J 5/18, C08K 7/26, C08L 67/00, C08L 101/00

(54) **RECYCLED PLASTIC FILM, USE OF PLASTIC FILM AS RECYCLED RAW MATERIAL, PLASTIC FILM FOR RECYCLED RAW MATERIAL, AND METHOD FOR PRODUCING RECYCLED PLASTIC FILM**

(30) Priority: 13.09.2021 JP 2021148718; 13.09.2021 JP 2021148721; 25.03.2022 JP 2022050658; 25.03.2022 JP 2022050659
(71) Applicant: Mitsubishi Chemical Corporation, Chiyoda-ku Tokyo 100-8251 (JP)
(72) Inventor: KURODA, Kiyonori, Tokyo 100-8251 (JP); HIRAKI, Toshihiro, Tokyo 100-8251 (JP); TADA, Kazunobu, Tokyo 100-8251 (JP)
(74) Representative: Hoffmann Eitle
(86) International application number: PCT/JP2022/034103
(87) International publication number: WO 2023/038138

(57) **Abstract**

There is provided a recycled plastic film containing a chemical tag, in which the chemical tag has a wavelength spectral profile that can be identified in association with article information of the recycled plastic film.

## Description

### Technical Field

The present invention relates to a recycled plastic film, use of a plastic film as a recycled raw material, a plastic film for a recycled raw material, and a method for producing a recycled plastic film.

### Background Art

Conventionally, waste plastics have been subjected to treatments such as landfill, marine disposal, incineration and the like, but it is becoming difficult to secure a landfill site, and marine disposal has become an environmental problem because plastics do not decompose.

Further, although it can be utilized as heat by incineration, there is a problem that it leads to global warming due to emission of carbon dioxide gas.

Therefore, in view of the recent increase in environmental problems, it is necessary to recycle waste plastic by reuse, regeneration, or the like, and research and development for this purpose are actively carried out.

Further, most of plastics are produced from fossil fuels, and construction of a recycling method is required also from the viewpoint of effective use of resources.

Polyester, which is a kind of plastic, has excellent properties such as heat resistance, weather resistance, mechanical strength, transparency, chemical resistance, and gas barrier properties, and is easily available in terms of price. Therefore, it is a resin that is widely used in containers and packaging materials for beverages and foods, molded articles, films, and the like.

In Japan, in particular, efforts to recycle PET bottles began in the 1990s, and PET bottles are now showing a high recycling rate.

The PET bottle regenerated raw material is reused in bottles (bottle-to-bottle) and films (bottle-to-film), and as a technique related to the use of such PET bottle regenerated raw material, for example, PTL 1 discloses a biaxially oriented polyethylene terephthalate film obtained by using the PET bottle regenerated raw material.

On the other hand, the recycling rate of polyester films still remains at a low level.

Plastic films are used for various applications such as packaging, electronic parts, electrical insulation, metal lamination, display components such as flexible displays, touch panels, antireflection, and prevention of glass scattering because of their lightness, inexpensiveness, and high molding processability. Among them, polyester films, in particular, polyethylene terephthalate films and polyethylene naphthalate films are widely used for the above applications because they have excellent mechanical properties, heat resistance and chemical resistance.

When a plastic film (for example, a polyester film) is recycled, it is considered that the collected plastic film (polyester film) is authenticated and identified in order to stabilize the quality of a recycled product.

For example, PTL 2 discloses a polyester film containing an inorganic compound as an identification compound in an amount of 1 to 500 ppm by weight with respect to dimethyl terephthalate. Regarding the added inorganic compound, metal components can be detected by X-ray fluorescence analysis, atomic absorption spectrometry, inductively coupled plasma emission analysis, or the like.

In addition, PTL 3 discloses a polyester film in which dimethyl terephthalate composed of an isotope of carbon or/and hydrogen as an identification compound is added in an amount of 1 to 1,000 ppm by weight with respect to the total dimethyl terephthalate. The isotopic compound of the added dimethyl terephthalate can be discriminated from the dimethyl terephthalate by performing analysis with ¹³CNMR, ¹HNMR, and a gas chromatograph mass spectrometer.

### Citation List

### Patent Literature

PTL 1: JP 2014-065282 A
PTL 2: JP 2002-173585 A
PTL 3: JP 2002-173523 A

### Summary of Invention

### Technical Problem

Due to recent environmental problems, plastic manufacturers are being required to be responsible for manufacturing, and in the future, it will be necessary to track and grasp the flow of plastic products such as plastic films including polyester films. For example, in the case of producing and recycling a plastic film (polyester film) containing an identification compound, a chemical marker or the like which enables authentication and identification, it is important that the identification compound or the chemical marker does not affect the basic properties of the film and can be used without any practical problem.

In PTLs 2 and 3, identification of the use of a recycled resin using an identification compound and prevention of deterioration in the quality of a product using a recycled resin are studied, but authentication and identification of a collected plastic film itself containing article information therein and tracking and grasping of the flow of a product such as a plastic film are not studied at all.

Accordingly, it is an object of the present invention to provide a recycled plastic film which can be authenticated, identified, and tracked based on article information contained therein, a plastic film suitable for use as a recycled raw material, and a method for producing the same, and to provide a polyester resin composition which can produce a polyester film having no problem in practical use while maintaining basic film properties, particularly a polyester film which is suitable for recycling and can be authenticated and identified.

### Solution to Problem

As a result of extensive studies, the present inventors have found that the above-mentioned problems can be solved by the following constitution.

The present invention has the following first aspect.

[1] A recycled plastic film containing a chemical tag, in which the chemical tag has a wavelength spectral profile that can be identified in association with article information of the recycled plastic film.
[2] The recycled plastic film according to [1] above, in which the article information includes manufacturer information.
[3] The recycled plastic film according to [1] or [2] above, in which the chemical tag contains porous silica particles (a) having pores with a diameter of a nanometer unit.
[4] The recycled plastic film according to [3] above, in which the porous silica particles (a) are readable using an optical spectroscopic reader.
[5] The recycled plastic film according to [3] or [4] above, in which the porous silica particles (a) include at least one selected from the group consisting of the following (a1) to (a3):
   (a1) porous silica particles having micropores with a pore diameter of 0.001 nm or more and less than 2 nm;
   (a2) porous silica particles having mesopores with a pore diameter of 2 nm or more and 50 nm or less; and
   (a3) porous silica particles having macropores with a pore diameter of more than 50 nm and 1000 nm or less.
[6] The recycled plastic film according to any one of [3] to [5] above, in which the porous silica particles (a) have an average particle diameter of 10 to 150 µm.
[7] The recycled plastic film according to any one of [3] to [6] above, in which a content of the porous silica particles (a) is 2 to 6000 ppm.
[8] The recycled plastic film according to any one of [1] to [7] above, containing particles (b) other than porous silica particles.
[9] The recycled plastic film according to [8] above, in which the particles (b) are inorganic particles and/or organic particles.
[10] The recycled plastic film according to [8] or [9] above, in which the particles (b) have an average particle diameter of 0.01 to 5 µm.
[11] The recycled plastic film according to any one of [1] to [10] above, in which the recycled plastic film contains a polyester.
[12] The recycled plastic film according to any one of [1] to [11] above, in which the film is stretched in at least one direction.
[13] Use of a plastic film containing a chemical tag as a recycled raw material, in which the chemical tag has a wavelength spectrum profile that can be identified in association with article information of the plastic film.
[14] The use according to [13] above, in which the article information includes manufacturer information.
[15] The use according to [13] or [14] above, in which the chemical tag contains porous silica particles (a) having pores with a diameter of a nanometer unit.
[16] The use according to [15] above, in which the porous silica particles (a) are readable using an optical spectroscopic reader.
[17] The use according to [15] or [16] above, in which the porous silica particles (a) include at least one selected from the group consisting of the following (a1) to (a3):
   (a1) porous silica particles having micropores with a pore diameter of 0.001 nm or more and less than 2 nm;
   (a2) porous silica particles having mesopores with a pore diameter of 2 nm or more and 50 nm or less; and
   (a3) porous silica particles having macropores with a pore diameter of more than 50 nm and 1000 nm or less.
[18] The use according to any one of [15] to [17] above, in which the porous silica particles (a) have an average particle diameter of 10 to 150 µm.
[19] The use according to any one of [15] to [18] above, in which a content of the porous silica particles (a) is 2 to 6000 ppm.
[20] The use according to any one of [13] to [19] above, in which the plastic film contains particles (b) other than porous silica particles.
[21] The use according to [20] above, in which the particles (b) are inorganic particles and/or organic particles.
[22] The use according to [20] or [21] above, in which the particles (b) have an average particle diameter of 0.01 to 5 µm.
[23] The use according to any one of [13] to [22] above, in which the plastic film contains a polyester.
[24] The use according to any one of [13] to [23] above, in which the plastic film is stretched in at least one direction.
[25] A plastic film for a recycled raw material, containing a chemical tag, in which the chemical tag has a wavelength spectral profile that can be identified in association with article information of the plastic film.
[26] The plastic film for a recycled raw material according to [25] above, in which the article information includes manufacturer information.
[27] The plastic film for a recycled raw material according to [25] or [26] above, in which the chemical tag contains porous silica particles (a) having pores with a diameter of a nanometer unit.
[28] The plastic film for a recycled raw material according to [27] above, in which the porous silica particles (a) are readable using an optical spectroscopic reader.
[29] The plastic film for a recycled raw material according to [27] or [28] above, in which the porous silica particles (a) include at least one selected from the group consisting of the following (a1) to (a3):
   (a1) porous silica particles having micropores with a pore diameter of 0.001 nm or more and less than 2 nm;
   (a2) porous silica particles having mesopores with a pore diameter of 2 nm or more and 50 nm or less; and
   (a3) porous silica particles having macropores with a pore diameter of more than 50 nm and 1000 nm or less.
[30] The plastic film for a recycled raw material according to any one of [27] to [29] above, in which the porous silica particles (a) have an average particle diameter of 10 to 150 µm.
[31] The plastic film for a recycled raw material according to any one of [27] to [30] above, in which a content of the porous silica particles (a) is 2 to 6000 ppm.
[32] The plastic film for a recycled raw material according to any one of [25] to [31] above, containing particles (b) other than porous silica particles.
[33] The plastic film for a recycled raw material according to [32] above, in which the particles (b) are inorganic particles and/or organic particles.
[34] The plastic film for a recycled raw material according to [32] or [33] above, in which the particles (b) have an average particle diameter of 0.01 to 5 µm.
[35] The plastic film for a recycled raw material according to any one of [25] to [34] above, in which the plastic film contains a polyester.
[36] The plastic film for a recycled raw material according to any one of [25] to [35] above, in which the film is stretched in at least one direction.
[37] A recycled plastic film obtained from the the plastic film for a recycled raw material according to any one of [25] to [36] above.
[38] A method for producing a recycled plastic film, including: a preparation step of preparing a plastic film containing a chemical tag; and a regeneration step of producing a recycled plastic film, in which the chemical tag has a wavelength spectral profile that can be identified in association with article information of the plastic film, and in which in the regeneration step, the article information is utilized.
[39] The method for producing a recycled plastic film according to [38] above, in which the regeneration step has a product sorting step utilizing the article information.
[40] The method for producing a recycled plastic film according to [38] or [39] above, in which the article information includes manufacturer information.
[41] The method for producing a recycled plastic film according to any one of [38] to [40] above, in which the chemical tag contains porous silica particles (a) having pores with a diameter of a nanometer unit.
[42] The method for producing a recycled plastic film according to [41] above, in which in the regeneration step, the porous silica particles (a) are read using an optical spectroscopic reader, and the plastic film containing the porous silica particles (a) is sorted.
[43] The method for producing a recycled plastic film according to [41] or [42] above, in which the porous silica particles (a) include at least one selected from the group consisting of the following (a1) to (a3):
   (a1) porous silica particles having micropores with a pore diameter of 0.001 nm or more and less than 2 nm;
   (a2) porous silica particles having mesopores with a pore diameter of 2 nm or more and 50 nm or less; and
   (a3) porous silica particles having macropores with a pore diameter of more than 50 nm and 1000 nm or less.
[44] The method for producing a recycled plastic film according to any one of [41] to [43] above, in which the porous silica particles (a) have an average particle diameter of 10 to 150 µm.
[45] The method for producing a recycled plastic film according to any one of [41] to [44] above, in which a content of the porous silica particles (a) is 2 to 6000 ppm.
[46] The method for producing a recycled plastic film according to any one of [38] to [45] above, in which the plastic film contains particles (b) other than porous silica particles.
[47] The method for producing a recycled plastic film according to [46] above, in which the particles (b) are inorganic particles and/or organic particles.
[48] The method for producing a recycled plastic film according to [46] or [47] above, in which the particles (b) have an average particle diameter of 0.01 to 5 µm.
[49] The method for producing a recycled plastic film according to any one of [38] to [48] above, in which the plastic film contains a polyester.
[50] The method for producing a recycled plastic film according to any one of [38] to [49] above, in which the plastic film is stretched in at least one direction.

The present invention has the following second aspect.
[1-1] A polyester resin composition containing a polyester and porous silica particles (a) having pores with a diameter of a nanometer unit.
[1-2] The polyester resin composition according to [1-1] above, in which the porous silica particles (a) are readable using an optical spectroscopic reader.
[1-3] The polyester resin composition according to [1-1] or [1-2] above, in which the porous silica particles (a) include at least one selected from the group consisting of the following (a1) to (a3):
   (a1) porous silica particles having micropores with a pore diameter of 0.001 nm or more and less than 2 nm;
   (a2) porous silica particles having mesopores with a pore diameter of 2 nm or more and 50 nm or less; and
   (a3) porous silica particles having macropores with a pore diameter of more than 50 nm and 1000 nm or less.
[1-4] The polyester resin composition according to [1-3] above, in which the porous silica particles (a) include the porous silica particles (a2) having mesopores.
[1-5] The polyester resin composition according to any one of [1-1] to [1-4] above, in which the porous silica particles (a) have an average particle diameter of 10 to 150 µm.
[1-6] The polyester resin composition according to any one of [1-1] to [1-5] above, in which a content of the porous silica particles (a) is 2 to 6000 ppm.
[1-7] The polyester resin composition according to any one of [1-1] to [1-6] above, further containing particles (b) other than the porous silica particles (a).
[1-8] The polyester resin composition according to [1-7] above, in which the particles (b) are inorganic particles and/or organic particles.
[1-9] The polyester resin composition according to [1-7] or [1-8] above, in which the particles (b) have an average particle diameter of 0.01 to 5 µm.
[1-10] A polyester film obtained from the polyester resin composition according to any one of [1-1] to [1-9] above.
[1-11] The polyester film according to [1-10] above, in which the polyester film is stretched in at least one direction.
[1-12] The polyester film according to [1-10] or [1-11] above, which has a haze of 10% or less.

### Advantageous Effects of Invention

According to the present invention, there are provided a recycled plastic film which can be authenticated, identified, and tracked by article information contained therein, a plastic film suitable for use as a recycled raw material and a method for producing the same, and a polyester resin composition capable of producing a polyester film which can be authenticated and identified, having no problem in practical use while maintaining the basic properties of the film and which is particularly suitable for recycling.

### Brief Description of Drawings

Fig. 1 is an SEM observation image of porous silica particles (a) having pores with a diameter of a nanometer unit used in Examples ((a) is an observation image obtained by observing at a measurement magnification of 500 times, and (b) is an observation image obtained by observing at a measurement magnification of 100000 times a portion indicated by a frame in the image (a)).
Fig. 2 is a graph showing results of tag capability evaluation performed by calculating an average number of particles detected from the films of Examples 2 and 3 and Comparative Example 1.

### Description of Embodiments

Next, an example of an embodiment of the present invention will be described. However, the present invention is not limited to the embodiment described below.

In a first aspect of the present invention, the following recycled plastic film is provided.

### «Recycled Plastic Film»

The recycled plastic film in the first aspect of the present invention (hereinafter, also referred to as "the present recycled film") contains a chemical tag.

The recycled plastic film is not particularly limited, and conventionally known ones can be used, and examples thereof include resin films in which polymers such as polyethylene, polypropylene, cycloolefin polymer, polyester, polystyrene, acrylic, polycarbonate, polyurethane, triacetyl cellulose, polyvinyl chloride, polyethersulfone, polyamide, polyimide, polyamideimide, and polyetheretherketone are formed into a film shape.

In addition, the recycled plastic film may be a mixture of these materials (polymer blend film) or a composite of constituent units (copolymer film, polymer alloy film) as long as it can be formed into a film.

Among these, a polyester film containing polyester is preferable from the viewpoint of excellent physical properties such as heat resistance, planarity, optical properties, and strength. Therefore, as the recycled plastic film, a recycled polyester film can be preferably mentioned.

The recycled film in the first aspect contains a regenerated raw material as a raw material of a plastic film described later. The regenerated raw material contains the chemical tag described above. More specifically, the recycled film contains the regenerated raw material in an amount of preferably 30% by mass or more, more preferably 50% by mass or more, still more preferably 70% by mass or more, particularly preferably 80% by mass or more, and most preferably 100% by mass. By containing a chemical tag in the recycled plastic film, not only is the plastic film capable of authentication, identification, and tracking by being associated with article information, but also the fact that it contains a chemical tag itself is identification and authentication of a recycled film using a regenerated raw material.

The regenerated raw material contained in the present recycled film may be a regenerated raw material derived from a film, a regenerated raw material derived from a bottle such as a pet bottle, or a regenerated raw material derived from a container such as a tray. In addition, examples of the recycling method of the regenerated raw material contained in the present recycled film include material recycling, chemical recycling, and thermal recycling. Furthermore, the regenerated raw material contained in the present recycled film may be a regenerated raw material collected from a plastic product after use, or may be a regenerated raw material collected from a process of producing a plastic film or the like.

The regenerated raw material may be used alone or in combination of two or more kinds thereof.

In addition, the present recycled film may have a single layer structure or a multilayer structure (that is, a layered film). When the present recycled film is a multilayer structure, it may have a two layer structure, a three layer structure or the like, or may have a multilayer structure of four or more layers without departing from the gist of the present invention, and the number of layers is not particularly limited. In the case where the present recycled film is a layered film, if at least one layer of the multilayer structure constituting the layered film contains the above-mentioned regenerated raw material, it corresponds to the recycled film according to the present aspect.

However, from the viewpoint of coping with film thinning and reducing the number of production steps, it is preferable to have a single layer structure or a multilayer structure of three or less layers. That is, the chemical tag may be contained in at least one of the layers constituting the present recycled film.

Further, the present recycled film may be an unstretched film (sheet) or a stretched film, but is preferably a film stretched in at least one direction.

The recycled polyester film preferably contains a polyester as a main component resin.

When the recycled polyester film is a multilayer structure, the main component resins of the respective layers are preferably a polyester.

The term "main component resin" refers to a resin having the largest content among the resins constituting the film (in the case of a multilayer structure, the resins constituting each layer), and is, for example, a resin accounting for 50% by mass or more, particularly 70% by mass or more, and particularly 80% by mass or more (including 100% by mass) among the resins constituting the film (each layer).

In a second aspect of the present invention, the following polyester resin composition is provided.

### «Polyester Resin Composition»

The polyester resin composition of the present aspect (hereinafter, also referred to as "the present resin composition") contains a polyester and porous silica particles (a) having pores with a diameter of a nanometer unit.

The present resin composition preferably contains a polyester as a main component resin.

The term "main component resin" refers to a resin having the largest content among the resins constituting the present resin composition, and is, for example, a resin accounting for 50% by mass or more, particularly 70% by mass or more, and particularly 80% by mass or more (including 100% by mass).

In the first aspect and the second aspect, examples of the resin other than the polyester include a polystyrene-based resin, a polyvinyl chloride-based resin, a polyvinylidene chloride-based resin, a chlorinated polyethylene-based resin, a polylactic acid-based resin, a polybutylene succinate-based resin, a polycarbonate-based resin, a polyamide-based resin (including an aramid-based resin), a polyacetal-based resin, an acrylic-based resin, an ethylenevinyl acetate copolymer, a polymethylpentene-based resin, a polyvinyl alcohol-based resin, a cyclic olefin-based resin, a polyacrylonitrile-based resin, a polyethylene oxide-based resin, a cellulose-based resin, a polyimide-based resin, a polyurethane-based resin, a polyphenylene sulfide-based resin, a polyphenylene ether-based resin, a polyvinyl acetal-based resin, a polybutadiene-based resin, a polybutene-based resin, a polyamideimide-based resin, a polyamide bismaleimide-based resin, a polyetherimide-based resin, a polyether ether ketone-based resin, a polyether ketone-based resin, a polyether sulfone-based resin, a polyketone-based resin, a polysulfone-based resin, and a fluorine-based resin. These resins other than polyester can be used alone or in combination of two or more kinds thereof.

The polyester contained in the recycled polyester film in the first aspect or the polyester contained in the polyester resin composition in the second aspect is not particularly limited. Specific examples thereof include a polyester obtained by polycondensation of a dicarboxylic acid component and a diol component.

Examples of the dicarboxylic acid component include terephthalic acid, isophthalic acid, orthophthalic acid, phthalic acid, 4,4'-diphenyldicarboxylic acid, 2,5-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfoterephthalic acid, sodium 5-sulfoisophthalic acid, adipic acid, dimer acid, azelaic acid, sebacic acid, dodecanedicarboxylic acid, glutaric acid, and succinic acid.

As the dicarboxylic acid component, tricarboxylic acids such as trimellitic acid and trimesic acid, and tetracarboxylic acids such as pyromellitic acid can also be used.

In addition, ester forming derivatives of dicarboxylic acids, for example, acid anhydrides such as phthalic anhydride and trimellitic anhydride, carboxylic acid salts such as monopotassium trimellitate, and the like can also be used.

Examples of the diol component include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylylene glycol, bisphenol A-ethylene glycol adduct, diethylene glycol, triethylene glycol, polyethylene glycol, polypropylene glycol, polytetramethylene ether glycol, spiro glycol, isosorbide, dimethylolpropionic acid, and potassium dimethylolpropionate. As the diol component, a trihydric or higher polyhydric alcohol such as glycerin or trimethylolpropane may be used.

Among the above-mentioned compounds, one or more dicarboxylic acid components and one or more diol components may be appropriately selected, and a polyester may be synthesized by a polycondensation reaction in an ordinary method.

In the first aspect, the polyester contained in the recycled polyester film may include a biomass polyester obtained from a plant-derived raw material, for example, a polyester using biomass-derived ethylene glycol as a diol component. Similarly, the polyester contained in the resin composition in the second aspect may include a biomass polyester obtained from a plant-derived raw material, for example, a polyester obtained by using biomass-derived ethylene glycol as a diol component.

In the first aspect and the second aspect of the present invention, it is preferable to use a polyester containing 50% or more of an aromatic dicarboxylic acid or an aliphatic dicarboxylic acid when the dicarboxylic acid component is taken as 100 mol%.

Further, in the first aspect, the polyester contained in the recycled polyester film contains a regenerated raw material as described above, but the polyester contained in the resin composition in the second aspect may also contain a regenerated raw material. The origin of the regenerated raw material is not particularly limited, and may be a regenerated raw material derived from a film, a regenerated raw material derived from a bottle such as a pet bottle, or a regenerated raw material derived from a plastic container such as a tray. In addition, the recycling method of the regenerated raw material is not particularly limited, and examples thereof include material recycling, chemical recycling, and thermal recycling. Furthermore, the regenerated raw material may be a regenerated raw material collected from a plastic product after use, or may be a regenerated raw material collected from a process of producing a plastic film or the like.

The regenerated raw material may be used alone or in combination of two or more kinds thereof.

The polyester may be a homopolyester or a copolymerized polyester.

When the polyester is formed of a homopolyester, a polyester obtained by polycondensing an aromatic dicarboxylic acid and an aliphatic glycol is preferable. Among them, terephthalic acid and 2,6-naphthalenedicarboxylic acid are more preferable as the aromatic dicarboxylic acid, and ethylene glycol, 1,4-butanediol, and 1,4-cyclohexanedimethanol are more preferable as the aliphatic glycol.

Typical polyesters include polyethylene terephthalate (PET), polyethylene naphthalate (PEN), and the like, and from the viewpoint of versatility, PET is more preferable.

On the other hand, when the polyester is a copolymerized polyester, the polyester contains, as a copolymerization component, a third component other than a compound serving as a main component of the dicarboxylic acid component and a compound serving as a main component of the diol component, which constitute the polyester. For example, in the case of PET, the third component is a component other than terephthalic acid and ethylene glycol. Specific examples of the dicarboxylic acid and the diol which are the main component and the third component are as described above.

In addition, one or more kinds of homopolyester and one or more kinds of copolymerized polyester may be used in combination.

In the first aspect of the present invention, the amount of the copolymer component is preferably 30 mol% or less, and more preferably 20 mol% or less, with respect to 100 mol% of the total dicarboxylic acid component in the polyester contained in the recycled polyester film. Further, the amount of the copolymer component is preferably 30 mol% or less, and more preferably 20 mol% or less, with respect to 100 mol% of the total diol component in the polyester contained in the recycled polyester film.

Among them, PET having an ethylene terephthalate unit or PEN having an ethylene-2,6-naphthalate unit in an amount of 80 mol% or more, preferably 90 mol% or more of the polyester contained in the recycled polyester film is preferable, and PET is more preferable from the viewpoint of versatility.

In the second aspect of the present invention, the amount of the copolymer component is preferably 30 mol% or less, and more preferably 20 mol% or less, with respect to 100 mol% of the total dicarboxylic acid component in the present resin composition. Further, the amount of the copolymer component is preferably 30 mol% or less, and more preferably 20 mol% or less, with respect to 100 mol% of the total diol component in the present resin composition.

Among them, PET having an ethylene terephthalate unit or PEN having an ethylene-2,6-naphthalate unit in an amount of 80 mol% or more, preferably 90 mol% or more of the polyester contained in the present resin composition is preferable, and PET is more preferable from the viewpoint of versatility.

When a polyester is produced (polycondensation) using ethylene glycol as one of the raw materials, diethylene glycol is usually produced as a by-product from ethylene glycol. In the description herein, this diethylene glycol is referred to as by-product diethylene glycol. The by-product amount of diethylene glycol from ethylene glycol varies depending on the mode of polycondensation and the like, but is about 5 mol% or less of ethylene glycol. In the present invention, in both the first aspect and the second aspect, 5 mol% or less of the above-mentioned by-product diethylene glycol is also included in ethylene glycol. On the other hand, depending on the content of diethylene glycol, more specifically, when diethylene glycol is contained in an amount of more than 5 mol%, the diethylene glycol is distinguished from the ethylene glycol.

In the first aspect and the second aspect of the present invention, the polymerization catalyst of the polyester is not particularly limited, and conventionally known compounds can be used, and examples thereof include a titanium compound, a germanium compound, an antimony compound, a manganese compound, an aluminum compound, a magnesium compound, and a calcium compound. Among these, at least one of a titanium compound and an antimony compound is preferable.

Therefore, in the first aspect of the present invention, the recycled polyester film preferably contains at least one of a titanium compound and an antimony compound, and in the second aspect of the present invention, the resin composition preferably contains at least one of a titanium compound and an antimony compound.

In order to suppress a precipitation amount of an oligomer component, in the first aspect of the present invention, a recycled polyester film may be produced using a polyester having a low content of the oligomer component as a raw material, and in the second aspect of the present invention, a polyester having a low content of the oligomer component may be used as a raw material.

In the first aspect, the regenerated raw material of the recycled polyester film may be a polyester having a low content of the oligomer component, or the polyester raw material that may be contained in addition to the regenerated raw material may be a polyester having a low content of the oligomer component, or may be both of these, and the amount of the polyester raw material may be appropriately adjusted according to the use and purpose. As a method for producing the polyester having a low content of the oligomer component, various known methods can be used, and examples thereof include a method of solid-phase polymerization after the production of a polyester. Alternatively, a polyester having a low content of the oligomer component may be obtained by subjecting the polyester to an esterification reaction or a transesterification reaction, further increasing the reaction temperature, and meltpolycondensation under reduced pressure.

In the first aspect of the present invention, the recycled polyester film may have a multilayer structure of three or more layers, and at least one surface layer of the recycled polyester film may be a layer using a polyester raw material having a low content of an oligomer component, thereby suppressing the precipitation amount of the oligomer component. As an example, in a case where the recycled polyester film has a multilayer structure of three layers, as described above, at least one layer may contain a regenerated raw material, and thus the surface layer may be a layer having a low content of an oligomer component and containing a regenerated raw material or a layer having a low content of an oligomer component and not containing a regenerated raw material. In the latter case, the other layer is a layer containing the regenerated raw material.

The resin composition in the second aspect of the present invention contains porous silica particles (a) having pores with a diameter of a nanometer unit. In the second aspect, since the porous silica particles (a) are contained in the resin composition as a compound (spectral label, optical label) that can be easily authenticated and identified, the resin composition can be made into an authenticated and identifiable resin composition suitable for recycling. Details of the porous silica particles (a) will be described later.

In addition, the resin composition in the second aspect of the present invention may contain the particles (b) for the main purpose of imparting easy sliding properties and preventing the occurrence of scratches in each step in a case where a polyester film is produced using the present resin composition as a raw material, and details of the particles (b) will also be described later.

In addition to the above-described constituent components, conventionally known antioxidants, antistatic agents, ultraviolet absorbers, heat stabilizers, lubricants, dyes, pigments, and the like can be further added to the resin composition in the second aspect of the present invention as necessary.

### <Method for Producing Polyester Resin Composition>

The method for producing the resin composition in the second aspect is not particularly limited, but for example, the present resin composition can be produced as raw material pellets by blending a resin raw material containing polyester as a main component resin and further other additive components at an arbitrary ratio and kneading the mixture at a temperature of about 250°C to 350°C (appropriately selected) for 5 minutes to 1 hour. The kneading can be carried out using a commonly used apparatus, for example, a single-screw extruder, a twinscrew extruder, a Banbury mixer, a roll mixer, a plastograph, or a kneader blender. In addition, the above-mentioned kneading may be carried out after preliminary mixing with, for example, a ribbon blender or a drum tumbler. A polyester film can be obtained by using the resin composition.

The recycled polyester film in the first aspect of the present invention and the polyester film obtained from the resin composition in the second aspect of the present invention may be an unstretched film (sheet) or a stretched film. In particular, it is preferably a uniaxially or biaxially stretched film obtained by stretching the unstretched film in at least one direction, and more preferably a biaxially stretched film from the viewpoint of the balance of mechanical properties, planarity, and film thinning.

### <Method for Producing Recycled Plastic Film/Polyester Film>

As the method for producing the recycled plastic film in the first aspect of the present invention and the method for producing the polyester film using the resin composition in the second aspect of the present invention, conventionally known methods can be used and are not particularly limited. Specifically, a method for producing the above-described film will be described by taking a biaxially stretched polyester film, which is a preferred aspect of the recycled plastic film in the first aspect and the polyester film obtained from the resin composition in the second aspect, as an example. In the case where the recycled plastic film/polyester film is a biaxially stretched film, an unstretched sheet may be first produced and then stretched in two directions to obtain a biaxially stretched film.

The unstretched sheet is preferably obtained by extruding a raw material as a molten sheet from a die using an extruder, and cooling and solidifying the sheet with a cooling roll. In this case, in order to improve the planarity of the sheet, it is preferable to increase the adhesiveness between the sheet and a rotary cooling drum, and an electrostatic application adhesion method and/or a liquid application adhesion method are preferably employed. Thus, an unstretched sheet is obtained.

In addition, the raw material of the recycled plastic film in the first aspect or the resin composition serving as the raw material in the second aspect may be supplied to an extruder after being appropriately dried as pellets or the like. In addition, chemical tags (porous silica particles (a)), particles, ultraviolet absorbers, other additives, and the like may be appropriately blended in the pellets.

The resulting unstretched sheet is then stretched uniaxially, or even biaxially. In this case, first, the unstretched sheet is stretched in one direction by a roll or tenter type stretching machine. The stretching temperature is usually 70 to 120°C, and preferably 80 to 110°C, and the stretching ratio is usually 2.5 to 7 times, and preferably 3 to 6 times.

Next, the sheet is stretched in a direction orthogonal to the stretching direction of the first stage, and in this case, the stretching temperature is usually 70 to 170°C, and the stretching ratio is usually 2.5 to 7 times, and preferably 3 to 6 times.

It is preferable to subsequently carry out a heat treatment at a temperature of 180 to 270°C under tension or under relaxation within 30% to obtain a biaxially stretched polyester film. In the stretching, a method of performing stretching in one direction in two or more stages can also be adopted. In this case, it is preferable to perform the stretching so that the stretching ratios in the two directions finally fall within the above-mentioned ranges, respectively.

In the first aspect and the second aspect, a simultaneous biaxial stretching method can also be adopted for the production of the film. The simultaneous biaxial stretching method is a method in which the unstretched sheet is stretched and oriented simultaneously in the longitudinal direction and the width direction in a state of being temperature-controlled at usually 70 to 120°C, preferably 80 to 110°C, and the stretching ratio is usually 4 to 50 times, preferably 7 to 35 times, and more preferably 10 to 25 times in terms of area ratio.

Subsequently, a heat treatment is carried out at a temperature of 170 to 250°C under tension or under relaxation within 30% to obtain a stretched oriented film. With respect to the simultaneous biaxial stretching apparatus employing the above-mentioned stretching system, conventionally known stretching systems such as a screw system, a pantograph system and a linear driving system can be employed.

The longitudinal direction of the film refers to a direction in which the film advances in a film production process, that is, a winding direction of a film roll. The width direction refers to a direction parallel to the film surface and orthogonal to the longitudinal direction, that is, a direction parallel to the central axis of the roll when formed into a film roll.

### «Chemical Tag»

The chemical tag contained in the recycled plastic film in the first aspect has a wavelength spectrum profile that can be identified in association with article information of the plastic film.

The chemical tag can be associated with article information of the plastic film, and can enable authentication, identification, and tracking of the plastic film.

As an advantage of containing the chemical tag in the film, a film sheet form occupies the highest proportion in the production ratio of plastic products. That is, when the object to be contained is a film, the effect can be exerted most effectively in the expression of the authentication, identification, and tracking of the plastic product.

In addition, since the product of the film is thinner than that of a bulky molded body, the film can exhibit sufficient capability such as a specific reflective pattern can be obtained even with the addition of a small amount of chemical tag.

Furthermore, in comparison with fibers, from the viewpoint of the reading area, the information of the chemical tag can be easily read in the form of a film (sheet).

The article information is information for authenticating and identifying the plastic film, and preferably includes manufacturer information. By allowing the manufacturer information to be authenticated and identified, it is possible to hold plastic manufacturers responsible for production.

Further, by authenticating and identifying the manufacturer information, it is possible to distinguish whether the collected plastic film is a product of one's own company or a product of another company, which leads to stabilization of the quality of recycled products.

It is also preferable that the article information includes configuration, composition, use information, and the like of a product. By associating the collected plastic film with the configuration, composition, use information, and the like of the product, the identity of the collected plastic film can be known in more detail, and the quality of the recycled product can be further stabilized.

The chemical tag is not particularly limited as long as it has a wavelength spectrum profile that can be identified in association with article information of the plastic film. For example, silica particles described in JP 2013-531849 A and the like can be mentioned, and an XRF identifiable marker described in JP 2019-529676 A and the like can also be used by previously associating a specific wavelength spectrum profile by the XRF identifiable marker with article information. Among these, it is preferable that the chemical tag includes porous silica particles (a) having pores with a diameter of a nanometer unit.

As described above, the resin composition in the second aspect of the present invention contains the porous silica particles (a) having pores with a diameter of a nanometer unit, and since the present resin composition contains the porous silica particles (a) as a compound (spectral label, optical label) that can be easily authenticated and identified, the resin composition can be made into an authenticated and identifiable resin composition suitable for recycling.

As the porous silica particles (a) preferably used as the chemical tag in the first aspect and the porous silica particles (a) contained in the resin composition of the second aspect, porous silica particles described in detail below can be used. Hereinafter, the porous silica particles (a) used in the first aspect and the second aspect will be described in detail.

### <Porous Silica Particles (a)>

In the field of plastic films, particularly polyester films, silica particles have been contained for the main purpose of imparting easy sliding properties and preventing the occurrence of scratches in each step. Therefore, the porous silica particles (a) having pores with a diameter of a nanometer unit do not affect the basic properties of the film. Therefore, it is considered that the recycled plastic film containing the porous silica particles (a) and the polyester film produced by using the resin composition containing the porous silica particles (a) can be used without any practical problems.

In particular, in the case where a metal compound is used as the compound capable of facilitating authentication and identification, when a functional layer is provided on a plastic film, for example, a polyester film, the metal compound may migrate to the surface of the functional layer, or even a trace amount of the metal compound may inhibit curing of the functional layer during secondary processing.

However, since silica particles have been conventionally and generally used, it is considered that the silica particles can be used without the above-mentioned problem and without any practical problems.

Examples of the porous silica particles (a) include those described in JP 2013-531849 A and the like. More specifically, examples thereof include silica particles having a nanoporous structure in which innumerable pores with a diameter of a nanometer unit, preferably micropores, mesopores, or macropores, are formed on the surface of high-purity silica particles.

When an optical spectroscopic reader is used, a specific reflection pattern based on the pores of the porous silica particles (a) can be read. Such a specific reflection pattern based on the pores of the porous silica particles (a) can be used as a spectral (optical) label.

Specifically, when an optical spectroscopic reader such as a hyperspectral camera manufactured by TruTag Technologies, Inc. is used, a specific reflection pattern (for example, reflection spectrum, reflection peak, reflection amplitude, and the like) based on the shape of the holes (pores) of the porous silica particles (a) can be obtained and read. That is, the porous silica particles (a) can be read using an optical spectroscopic reader. The optical spectroscopic reader may be installed with software or an application in a smartphone, a tablet terminal, or the like so that the reader can be read by using the software or the application.

Therefore, by irradiating the recycled plastic film of the first aspect with light and detecting a specific reflection pattern, the present recycled film can be authenticated and identified, and by irradiating the resin composition of the second aspect with light and detecting a specific reflection pattern, the present resin composition can be authenticated and identified.

In addition, since the reflection pattern differs depending on the structure (shape) of the pores on a nanometer unit, it is possible to apply the reflection pattern to authentication and identification of various products by associating the reflection pattern with specific product information (manufacturer information, configuration, composition, and use information of the products, and the like).

In this case, the term "various products" used herein means products of different grades.

In the description herein, the expression "with a diameter of a nanometer unit" means that the diameter is 10⁻¹² m (a picometer unit) or more and 10⁻⁶ m (a micrometer unit) or less.

The pores of the porous silica particles (a) preferably have a diameter of 0.001 nm (10⁻¹² m) or more and 100 nm (10⁻⁷ m) or less, more preferably have a diameter of 0.001 nm (10⁻¹² m) or more and 10 nm (10⁻⁸ m) or less, and most preferably have a diameter of 0.001 nm (10⁻¹² m) or more and 1 nm (10⁻⁹ m) or less.

Similarly, the diameter of the pores of the porous silica particles (a) is also preferably 0.01 nm (10⁻¹¹ m) or more and 1000 nm (10⁻⁶ m) or less, more preferably 0.1 nm (10⁻¹⁰ m) or more and 1000 nm (10⁻⁶ m) or less, and most preferably 1 nm (10⁻⁹ m) or more and 1000 nm (10⁻⁶ m) or less.

In a specific embodiment according to the first aspect and the second aspect of the present invention, the porous silica particles (a) preferably include at least one selected from the group consisting of: (a1) porous silica particles having micropores with a pore diameter of 0.001 nm or more and less than 2 nm; (a2) porous silica particles having mesopores with a pore diameter of 2 nm or more and 50 nm or less; and (a3) porous silica particles having macropores with a pore diameter of more than 50 nm and 1000 nm or less.

In one embodiment according to the first aspect and the second aspect of the present invention, the porous silica particles (a) preferably include at least one of porous silica particles (a1) having micropores and porous silica particles (a2) having mesopores.

The porous silica particles (a) in the present embodiment preferably have a pore diameter of 0.001 nm (10⁻¹² m) or more and 50 nm (5 × 10⁻⁸ m) or less, more preferably have a pore diameter of 0.01 nm (10⁻¹¹ m) or more and 50 nm (5 × 10⁻⁸ m) or less, and most preferably have a pore diameter of 0. 1 nm (10⁻¹⁰ m) or more and 50 nm (5 × 10⁻⁸ m) or less.

In another embodiment of the present invention, the porous silica particles (a) preferably include at least one of porous silica particles (a2) having mesopores and porous silica particles (a3) having macropores.

In the porous silica particles (a) in the present embodiment, the pore diameter is preferably 2 nm (2 × 10⁻⁹ m) or more and 1000 nm (10⁻⁶ m) or less, and more preferably 2 nm (2 × 10⁻⁹ m) or more and 100 nm (10⁻⁷ m) or less.

In the present invention, as the porous silica particles (a), a combination of the porous silica particles (a1) having micropores, the porous silica particles (a2) having mesopores, and the porous silica particles (a3) having macropores can also be used. In particular, the recycled plastic film in the first aspect and the resin composition in the second aspect preferably contain, as the porous silica particles (a), porous silica particles (a2) having mesopores.

As described above, the recycled plastic film in the first aspect and the resin composition in the second aspect contain a spectral (optical) label derived from the pores of the porous silica particles (a) therein. Therefore, a product can be authenticated or identified by reading such a spectral label with an optical spectroscopic reader.

The average particle diameter of the porous silica particles (a) is preferably 10 to 150 µm, more preferably 10 to 100 µm, still more preferably 10 to 50 µm, and most preferably 10 to 35 µm. When the average particle diameter is 10 µm or more, capability is sufficiently exhibited, for example, a specific reflection pattern is obtained. When the average particle diameter is 150 µm or less, the dispersibility of the silica particles is sufficient.

The average particle diameter of the porous silica particles (a) can be determined as an average value of diameters of 10 or more particles measured with a scanning electron microscope (SEM). In this case, in the case of non-spherical particles, the average value of the longest diameter and the shortest diameter can be measured as the diameter of each particle.

The shape of the porous silica particles (a) is not particularly limited, and any of a spherical shape, a lump shape, a rod shape, a flat shape, a plate shape, a scale shape, and the like may be used. Among them, the shape of the porous silica particles (a) is preferably non-spherical, the major axis, the minor axis, and the thickness are each preferably on the order of micrometers or more, and it is more preferable that the major axis, the minor axis, and the thickness have at least one aspect ratio different from each other. Examples of such a shape include a plate shape and a scale shape, and with such a shape, reading is possible even when devices having a low optical spectroscopic reading capability, such as smartphones, are used as optical spectroscopic readers.

In the first aspect, the content of the porous silica particles (a) in the present recycled film is preferably 2 to 6000 ppm. In the second aspect, the content of the porous silica particles (a) in the present resin composition is preferably 2 to 6000 ppm. When the content of the porous silica particles (a) is 2 ppm or more, the capability is sufficiently exhibited such that a specific reflective pattern is obtained.

On the other hand, when the content of the porous silica particles (a) is 6000 ppm or less, the dispersibility of the silica particles is sufficient.

In the first aspect, from the viewpoint of transparency of the present recycled film, the content of the porous silica particles (a) in the present resin composition is more preferably 2.5 to 5000 ppm, still more preferably 2.5 to 1,000 ppm, particularly preferably 2.5 to 500 ppm, and particularly preferably 2.5 to 100 ppm, and for example, specifically 2.5 to 50 ppm.

In the second aspect, from the viewpoint of transparency in a case where a polyester film or the like is produced using the present resin composition as a raw material, the content of the porous silica particles (a) in the present resin composition is more preferably 2.5 to 5000 ppm, still more preferably 2.5 to 1,000 ppm, particularly preferably 2.5 to 500 ppm, and particularly preferably 2.5 to 100 ppm, and for example, specifically 2.5 to 50 ppm.

The porous silica particles (a) can also play the role of imparting easy sliding properties and preventing the occurrence of scratches in each step when the recycled plastic film in the first aspect or the polyester film using the second resin composition is produced.

As described above, in the first aspect of the present invention, since the present recycled films include the manufacturer information and the article information such as the configuration, composition, and use of the products, when the recycled films are collected and recycled again, for example, the article information can be utilized to sort the recycled films for each product.

In addition, since the present recycled film contains a chemical tag with which article information of a plastic film is associated, the flow of the plastic product such as the plastic film can be tracked and grasped.

For example, by producing the plastic film with which specific article information is associated, it is possible to unitarily manage the amount of use in the customer/end user and the amount of collection from the customer/end user. In particular, if tracking and grasping can be performed at each stage of producing, selling, collecting, sorting, regenerating, and the like, it can be expected that not only recycling again, but also producing, selling, and the like can be smoothly performed.

In addition, the method of adding the chemical tag is not particularly limited, but the chemical tag and the raw material (for example, polyester) of the recycled plastic film may be formed into a master batch in advance, or the chemical tag may be directly added at the raw material introduction stage in the production process of the recycled plastic film.

In the second aspect of the present invention, as described above, since the present resin composition contains a spectral (optical) label derived from the pores of the porous silica particles (a) therein, the product can be authenticated or identified by reading such a spectral label with an optical spectroscopic reader.

In particular, since polyester products using the present resin composition as a raw material, for example, polyester films, include manufacturer information and product information such as the configuration, composition, and use of the products, when the polyester products are collected and recycled, for example, the product information can be utilized to sort the polyester products for each product.

In addition, similarly to the first aspect described above, since the polyester product obtained using the resin composition of the second aspect includes the porous silica particles (a) associated with the article information, the flow of the polyester product can also be tracked and grasped.

For example, by producing the polyester product with which specific article information is associated, it is possible to unitarily manage the amount of use in the customer/end user and the amount of collection from the customer/end user. In particular, if tracking and grasping can be performed at each stage of producing, selling, collecting, sorting, regenerating, and the like, it can be expected that not only recycling, but also producing, selling, and the like can be smoothly performed.

Therefore, it can be said that the present resin composition is a resin composition suitable for recycling.

In the second aspect of the present invention, the method of adding the porous silica particles (a) is not particularly limited, but the silica particles and the polyester may be formed into a master batch in advance, or the silica particles may be directly added at the raw material introduction stage in the production process of the polyester film.

### <Particle (b)>

In the first aspect of the present invention, the present recycled film may contain particles (b) other than the porous silica particles for the main purpose of imparting easy sliding properties and preventing the occurrence of scratches in each step.

Further, as described above, also in the second aspect of the present invention, the particles (b) can be contained for the main purpose of imparting easy sliding properties and preventing the occurrence of scratches in each step in a case where a polyester film is produced using the present resin composition as a raw material.

Examples of the particles (b) that can be used in the first aspect and the second aspect of the present invention include the following. Hereinafter, the particles (b) will be described in detail.

The type of the particle (b) is not particularly limited as long as it is a particle capable of imparting easy sliding properties. However, the porous silica particles (a) described above are excluded.

Unlike the porous silica particles (a), the particles (b) are preferably particles that do not have pores (the pores of the porous silica particles (a)). Such particles (b) are more preferably inorganic particles and/or organic particles.

Specific examples thereof include inorganic particles such as silica, calcium carbonate, magnesium carbonate, barium carbonate, calcium sulfate, calcium phosphate, magnesium phosphate, kaolin, aluminum oxide, and titanium oxide; crosslinked polymer particles such as crosslinked silicone resin particles, crosslinked acrylic resin particles, crosslinked styreneacrylic resin particles, and crosslinked polyester particles; and organic particles such as calcium oxalate and an ion exchange resin. Examples of the composition of the crosslinked polymer particles include crosslinked polymer particles of a divinylbenzene polymer, an ethylvinylbenzene-divinylbenzene copolymer, a styrene-divinylbenzene copolymer, a styreneethylvinylbenzene-divinylbenzene copolymer, an ethylstyrene-methyl methacrylate-divinylbenzene copolymer, an ethylene glycol dimethacrylate polymer, a styrene-ethylene glycol dimethacrylate copolymer, and a methyl methacrylate-divinylbenzene copolymer. The crosslinked polymer particles may be composed of three or more components.

The particles (b) may be used alone or in combination of two or more kinds thereof.

Further, in the first aspect of the present invention, during the production process of a raw material (for example, polyester), and in the second aspect of the present invention, during the production process of the polyester contained in the present resin composition, precipitated particles obtained by precipitating and finely dispersing a part of a metal compound such as a catalyst can also be used as the particles (b).

The shape of the particles (b) to be used is also not particularly limited, and any of a spherical shape, a lump shape, a rod shape, a flat shape, and the like may be used. Furthermore, the hardness, specific gravity, color, and the like are not particularly limited.

The average particle diameter of the particles (b) to be used is usually 0.01 to 5 µm, preferably 0.03 to 4 µm, and more preferably 0.05 to 3 µm, in consideration of compatibility between transparency and handleability when the present recycled film in the first aspect of the present invention or the polyester film obtained from the resin composition in the second aspect of the present invention is produced.

The average particle diameter of the particles (b) can be determined as an average value of diameters of 10 or more particles measured with a scanning electron microscope (SEM). In this case, in the case of non-spherical particles, the average value of the longest diameter and the shortest diameter can be measured as the diameter of each particle.

In the first aspect of the present invention, the content of the particles (b) in the layer containing the particles (b) of the present recycled film is preferably 0.0003% by mass or more and 5% by mass or less, more preferably 0.01% by mass or more and 3% by mass or less, and still more preferably 0.01% by mass or more and 0.3% by mass or less. When the particles (b) are not contained or when the content of the particles (b) is small, the transparency of the produced plastic film becomes high, and a good plastic film is obtained from the viewpoint of transparency. On the other hand, when the particles (b) are contained in the above range, the sliding property also becomes good.

When the particles (b) are contained in the present recycled film, for example, it is preferable to provide a surface layer and an intermediate layer and to contain the particles (b) in at least one of the surface layers.

When the present recycled film is a single layer, the layer containing the particles (b) is the entire present recycled film.

In the second aspect of the present invention, the content of the particles (b) in the present resin composition is preferably 0.0003% by mass or more and 5% by mass or less, more preferably 0.01% by mass or more and 3% by mass or less, and still more preferably 0.01% by mass or more and 0.3% by mass or less. When the particles (b) are not contained or when the content of the particles (b) is small, the transparency of the produced polyester film becomes high, and a good polyester film is obtained from the viewpoint of transparency. On the other hand, when the particles (b) are contained in the above range, the sliding property also becomes good.

In the first aspect of the present invention, the method of adding the particles (b) to the present recycled film is not particularly limited, and a conventionally known method may be employed. For example, it can be added at any stage in the production of the raw material (e.g. polyester), but when the raw material is polyester, it is preferably added after completion of the esterification or transesterification reaction.

In the second aspect of the present invention, the method of adding the particles (b) to the present resin composition is not particularly limited, and a conventionally known method may be employed. For example, it can be added at any stage in the production of the polyester contained in the resin composition, but it is preferably added after completion of the esterification or transesterification reaction.

### <Others>

In the first aspect of the present invention, in addition to the above-mentioned constituent components, other components such as conventionally known antioxidants, antistatic agents, ultraviolet absorbers, heat stabilizers, lubricants, dyes, pigments, and the like can be added to the present recycled film as necessary.

In the case where the present recycled film is a multilayer structure, it is not necessary to incorporate the above-mentioned other components into all the layers, and they may be incorporated into at least one layer.

In the first aspect of the present invention, a functional layer may be provided on at least one surface of the present recycled film. The constituent components of the functional layer are not particularly limited. Examples of the functional layer include a hard coat layer, an antistatic layer, a release layer, an easy adhesive layer, a pressure-sensitive adhesive layer, a printed layer, a decorative layer, a light-shielding layer, an ultraviolet light-shielding layer, a refractive index adjusting layer, and an oligomer sealing layer.

The functional layer may be formed by in-line coating in which the surface of the film is treated during the film-forming step of the present recycled film, or may be formed by off-line coating in which the functional layer is applied to the film once produced outside the system.

In the second aspect of the present invention, as described above, in addition to the above-described constituent components, conventionally known antioxidants, antistatic agents, ultraviolet absorbers, heat stabilizers, lubricants, dyes, pigments, and the like can be further added to the resin composition as necessary, and therefore, the polyester film obtained from the present resin composition can also contain these components.

Also in the second aspect of the present invention, a functional layer may be provided on at least one surface of the polyester film obtained from the resin composition of the present aspect. The constituent components of the functional layer are not particularly limited. Examples of the functional layer include a hard coat layer, an antistatic layer, a release layer, an easy adhesive layer, a pressure-sensitive adhesive layer, a printed layer, a decorative layer, a light-shielding layer, an ultraviolet light-shielding layer, a refractive index adjusting layer, and an oligomer sealing layer.

The functional layer may be formed by in-line coating in which the surface of the film is treated during the film-forming step of the polyester film, or may be formed by off-line coating in which the functional layer is applied to the film once produced outside the system.

### <Physical Properties>

The thickness of the recycled plastic film in the first aspect of the present invention or the thickness of the polyester film obtained by the resin composition in the second aspect of the present invention is not particularly limited as long as the film can be formed, but is preferably in a range of 5 to 350 µm, more preferably 8 to 125 µm, still more preferably 10 to 100 µm, and particularly preferably 12 to 75 µm.

The thickness of the film can be measured by the method described in Examples.

The present recycled film in the first aspect of the present invention and the polyester film obtained from the resin composition in the second aspect of the present invention have an appropriate haze value depending on the application.

The haze value of the film is preferably 10% or less, more preferably 8% or less, still more preferably 5% or less, and particularly preferably 3% or less in applications where transparency is required, such as optical applications and packaging applications. Within such a range, the film has sufficient transparency. The haze value can be achieved by the present recycled film in the first aspect of the present invention and the polyester film obtained from the resin composition in the second aspect of the present invention.

The lower limit of the haze value is not particularly limited, but is usually 0.01% or more.

The haze value of the film can be measured by the method described in Examples.

In a third aspect of the present invention, the following use of a plastic film as a recycled raw material is provided.

### «Use of Plastic Film as Recycled Raw Material»

According to the third aspect of the present invention, use of a plastic film having the chemical tag, i.e., having a wavelength spectrum profile that can be identified in association with article information of the plastic film, as a recycled raw material (hereinafter, also referred to as "the present use") is provided.

The use of the plastic film as a recycled raw material in the present aspect is to use the plastic film as a raw material for regenerating (recycling) the above-mentioned plastic film, i.e., the plastic film containing the chemical tag. The plastic film used as the recycled raw material may contain the above-described chemical tag, and may be the recycled plastic film in the first aspect, may be a virgin plastic film, or may be a combination of the recycled plastic film and the virgin plastic film.

Specific aspects and preferred aspects of the above-described virgin plastic film are the same as those of the recycled plastic film according to the first aspect (the present recycled film) except that the regenerated raw material is not used, and all of them can be applied.

The form of a product produced using the recycled raw material is not particularly limited, and examples thereof include a film, a bottle, and a tray. For example, it may be film-to-film recycling in which a product produced using the recycled raw material is made into a film, or it may be recycling into a different form such as film-to-bottle recycling in which a product produced using the recycled raw material is made into a bottle, or film-to-tray recycling in which the product is made into a tray.

The recycled raw material may be, for example, a material obtained by pulverizing a collected plastic film into flakes and/or a material obtained by chipping (pelletizing) the flakes; as described above, as long as the plastic film contains a chemical tag, the recycled raw material may be a material obtained by pulverizing a virgin plastic film into flakes and/or a material obtained by chipping (pelletizing) the flakes; and the raw material derived from the collected film and the raw material derived from the virgin film may be used in combination.

As a method for obtaining the flakes, a conventionally known method can be used. For example, a method for obtaining the flakes by pulverizing a plastic film with a pulverizer can be mentioned.

In addition, as a method for making the flakes into chips, a conventionally known method can be used. For example, there is a method of obtaining a raw material in the form of chips by melt-extruding flakes and then cutting the strand-like melt-extruded product.

In addition, specific aspects and preferred aspects of the plastic film according to the present use are the same as the recycled plastic film of the first aspect except that a regenerated raw material is essential, and all of them can be applied. That is, when the plastic film used as the recycled raw material is a recycled film, all of the first aspect including the preferred aspect of the regenerated raw material can be applied, and when a virgin film is used as the plastic film to be used, all of the first aspect can be applied except that the regenerated raw material is not used.

The film (recycled film and/or virgin film) used in the present aspect is a plastic film containing a chemical tag that can be authenticated, identified, and tracked by being associated with article information, and is suitable for recycling. Therefore, the film can be applied to use as a recycled raw material.

In a fourth aspect of the present invention, the following plastic film for a recycled raw material is provided.

### «Plastic Film for Recycled Raw Material»

According to the fourth aspect of the present invention, there is provided a plastic film for a recycled raw material, having the chemical tag, i.e., having a wavelength spectrum profile that can be identified in association with article information of the plastic film.

In the plastic film for a recycled raw material according to the present aspect, the recycled raw material is obtained from a plastic film having a wavelength spectrum profile that can be identified in association with article information, that is, the plastic film is used for a recycled raw material application. According to the present aspect, a recycled plastic film obtained from the plastic film for a recycled raw material is also provided.

The plastic film for a recycled raw material in the fourth aspect may contain the above-described chemical tag, and may be the recycled plastic film in the first aspect, may be a virgin plastic film, or may be a combination of the recycled plastic film and the virgin plastic film.

In addition, as specific aspects and preferable aspects of the plastic film for a recycled raw material used in the present aspect, the same plastic film as the recycled plastic film in the first aspect can be used, and all of them can be applied.

In addition, specific aspects and preferred aspects of the virgin plastic film for a recycled raw material that can be used in the present aspect are the same as those of the recycled plastic film of the first aspect except that a regenerated raw material is not used, and all of them can be applied.

The form of a product produced using the recycled raw material is not particularly limited, and examples thereof include a film, a bottle, and a tray. For example, it may be film-to-film recycling in which a product produced using the recycled raw material is made into a film, or it may be recycling into a different form such as film-to-bottle recycling in which a product produced using the recycled raw material is made into a bottle, or film-to-tray recycling in which a product produced using the recycled raw material is made into a tray.

In a fifth aspect of the present invention, the following method for producing a recycled plastic film is provided.

### <<Method for Producing Recycled Plastic Film>>

According to the fifth aspect of the present invention, there is provided a method for producing a recycled plastic film (hereinafter also referred to as the "present production method"), which includes a preparation step of preparing a plastic film containing a chemical tag, and a regeneration step of producing a recycled plastic film.

### <Preparation Step>

The preparation step in the present aspect is a step of preparing a plastic film having the chemical tag, i.e., having a wavelength spectrum profile that can be identified in association with article information of the plastic film.

In the preparation step, the plastic film is collected for the purpose of recycling. The shape of the plastic film to be collected is not particularly limited, and the plastic film may be in the form of a roll or a lump.

Further, the plastic film to be collected may include the following films (a) to (c):
(a) A film that does not become a product when the plastic film is produced (for example, a film end portion cut and removed from the product).
(b) A film broken during film formation.
(c) A film that does not reach the product due to poor quality, etc.

Further, in the preparation step, a virgin plastic film may be prepared as long as it is a plastic film containing a chemical tag.

Specific aspects and preferred aspects of the plastic film prepared in the preparation step of the present production method are the same as those of the recycled plastic film according to the above-mentioned first aspect, except that a regenerated raw material is essential, and all of them can be applied. As the plastic film prepared in the preparation step, a recycled plastic film containing a regenerated raw material, a plastic film not containing a regenerated raw material, or both of these can be used.

### <Regeneration Step>

The regeneration step in the present aspect is a step of producing a recycled plastic film using article information associated with the plastic film prepared in the preparing step.

It is preferable that the regeneration step includes a product sorting step (A) using the article information contained in the prepared plastic film therein.

The article information is obtained, for example, by reading a spectral (optical) label contained in a chemical tag contained in the plastic film, and the plastic film can be authenticated and identified. It is preferable to sort the plastic film (product sorting) by utilizing the article information thus obtained.

Specifically, in an aspect in which the chemical tag contains the porous silica particles (a) having pores with a diameter of a nanometer unit, the plastic film containing the porous silica particles (a) can be sorted by reading the porous silica particles (a) using an optical spectroscopic reader.

The product sorting includes, for example, sorting by manufacturer. In this case, it is preferable that the article information includes manufacturer information. By including manufacturer information, it is possible to distinguish whether the collected plastic film is a product of one's own company or a product of another company, which leads to the stabilization of the quality of recycled products such as recycled raw materials and recycled plastic films.

In addition, examples of the product sorting include sorting according to the configuration, composition, use, and the like of the product. In this case, the article information preferably includes configuration, composition, use information, and the like of the product. By including the configuration, composition, use information, and the like of the product, the identity of the collected plastic film can be understood in more detail, and the quality of the recycled product can be further stabilized.

The regeneration step may have a recycled raw material production step (B) in which the collected plastic film is pulverized into flakes and/or the flakes are converted into chips (pellets) to obtain a recycled material.

The step (B) is preferably performed after the step (A), but may be performed from the step (B) without passing through the step (A).

As a method for obtaining the flakes and chips, a conventionally known method can be used.

Next, the method may have a film production step (C) of producing a recycled plastic film using the recycled raw material obtained in the step (B). In the step (C), the production method is not particularly limited as long as the film can be formed by using the recycled raw material obtained in the step (B), and a conventionally known method can be used. For example, in addition to a production method by an extrusion method including a step of charging a raw material containing the recycled raw material into at least one extruder and melt-extruding the raw material from a T-die into a sheet shape, a method for producing a recycled plastic film by a method of laminating films extrusion molded from die outlets after melting separately in a plurality of extruders or the like can be mentioned. Among these, a production method by an extrusion method including a step of melt-extruding the raw material into a sheet shape from a T-die is preferable.

In the step (C), the unstretched film (sheet) obtained as described above is preferably stretched in at least one direction, specifically, made into a uniaxially or biaxially stretched film.

In the first aspect of the present invention, since a preferred aspect of the recycled plastic film is a polyester film, particularly a biaxially stretched polyester film, and a preferred aspect of the recycled plastic film in the present aspect is also a polyester film, particularly a biaxially stretched polyester film. The detailed production method (stretching temperature, stretching ratio, etc.) in this case is the same as the method for producing the biaxially stretched polyester film of the present recycled film in the first aspect described above.

The expression "using a recycled raw material" means not only using a recycled raw material alone but also using a mixture of a recycled raw material and a virgin raw material in order to prevent deterioration of the quality of a recycled product, and it is preferable to use a mixture of a recycled raw material and a virgin raw material in this manner. In other words, the expression "using a recycled raw material" means including the recycled raw material obtained in the step (B).

In addition, the expression "using a recycled raw material" means that in a case where the recycled plastic film is a multilayer structure (that is, a layered film), a recycled raw material is used for at least one of the layers.

In addition, since the polyester film (second film) obtained from the resin composition in the second aspect also contains the porous silica particles (a) as a compound (spectral label, optical label) that can be easily authenticated and identified as described above, in another embodiment of the second aspect, the use of the second film as a recycled raw material can be provided, in another embodiment, a method for producing a recycled polyester film can be provided, and in still another embodiment, a polyester film for a recycled raw material can be provided. The contents described in detail in the aspect of the plastic film in the first and third to fifth aspects can be incorporated into the other aspects in the second aspect of the present invention, except that the regenerated raw material is essential in the first aspect. At this time, a portion described as "plastic film" in the first and third to fifth aspects should be read as "polyester film" in the other embodiment in the second aspect, and "chemical tag" should be read as "porous silica particles (a)".

### <<Description of Terms>>

In the present invention, the term "film" includes the term "sheet", and the term "sheet" includes the term "film".

In the present invention, when "X to Y" (X and Y are arbitrary numbers) is described, it includes the meaning of "X or more and Y or less" as well as the meaning of "preferably larger than X" or "preferably less than Y" unless otherwise specified.

In addition, when "X or more" (X is an arbitrary number) is described, unless otherwise specified, the description includes the meaning of "preferably larger than X", and when "Y or less" (Y is an arbitrary number) is described, unless otherwise specified, the description includes the meaning of "preferably less than Y".

### Examples

Hereinafter, the present invention will be described in more detail by way of Examples. However, the present invention is not limited to the following Examples as long as the gist of the present invention is not exceeded.

### <Evaluation Method>

### (1) Intrinsic Viscosity (dL/g) of Polyester

In the case where particles were blended, 1 g of polyester from which the particles had been removed was precisely weighed, 100 mL of a mixed solvent of phenol/tetrachloroethane = 50/50 (mass ratio) was added and dissolved, and the viscosity was measured at 30°C.

### (2) Average Particle Diameter

The average particle diameter of the particles was determined by observing 10 or more particles using a scanning electron microscope (SEM) (SU8220, manufactured by Hitachi High-Tech Corporation), measuring the diameters of the particles, and obtaining the average value thereof. In this case, in the case of non-spherical particles, the average value of the longest diameter and the shortest diameter was measured as the diameter of each particle.

### (3) Film Haze

The haze of the film was measured using a haze meter NDH-2000 manufactured by Nippon Denshoku Industries Co., Ltd. in accordance with JIS K 7136:2000.

### (4) Film Thickness

The thickness of the film was measured at five unspecified points on the surface with a 1/1000 mm dial gauge, and the average thereof was taken as the thickness.

### (5) Tag Capability Evaluation

Reading with an optical spectroscopic reader was performed on a smartphone (Samsung Galaxy S9+) using TruTag acquisition software 1.8.1-EX and mode tpp, manufactured by TruTag Technologies, Inc..

More particularly, TruTag acquisition software was used to acquire 30 images of each film on the black portion of a Leneta drawdown chart under office lighting conditions.

Then, the number of detected particles was counted for 30 acquired film images, and the average value (average number of particles) was calculated.

The tag capability was evaluated according to the following criteria.
A: Since the average number of particles is sufficient, authentication and identification are possible.
X: Since the average number of particles is insufficient, authentication and identification are difficult.

### <Materials used>

### (Polyester)

Polyester A: homopolyethylene terephthalate (intrinsic viscosity = 0.85 dL/g)
Polyester B: a masterbatch (intrinsic viscosity = 0.65 dL/g) obtained by blending 0.2% by mass of silica particles (corresponding to the particles (b)) having an average particle diameter of 2.4 µm and not having pores with homopolyethylene terephthalate

### (Chemical Tag/Porous Silica Particles (a))

Porous silica particles (a): TruTags (Type 2) manufactured by TruTag Technologies, Inc.; particle size: 3 × 35 µm (porous silica particles (a) containing porous silica particles (a2) having mesopores with an average particle diameter of 19 µm and pore diameters of several tens of nanometers)

### (Example 1)

A PET piece (polyester resin composition) containing 5000 ppm of the porous silica particles (a) was prepared by kneading 0.5% by mass of the porous silica particles (a) and 99.5% by mass of the polyester A in a nitrogen atmosphere at 280°C and 50 rpm for 10 minutes using a plastograph (Labo Plastomill 4C150, manufactured by Toyo Seiki Seisaku-sho, Ltd.).

Next, the PET piece was melted at 270°C and pressed using a press machine (manufactured by Shinto Metal Industries, Ltd.) to prepare a sheet of 10 cm square. Thereafter, the sheet was rapidly cooled using a cooling press machine (manufactured by Shinto Metal Industries, Ltd.).

Subsequently, the sheet was sequentially stretched at 90°C at a magnification of 3 × 3 using a batch stretching machine (IMC-11A9 manufactured by Imoto machinery Co., Ltd.) to obtain a biaxially stretched polyester film.

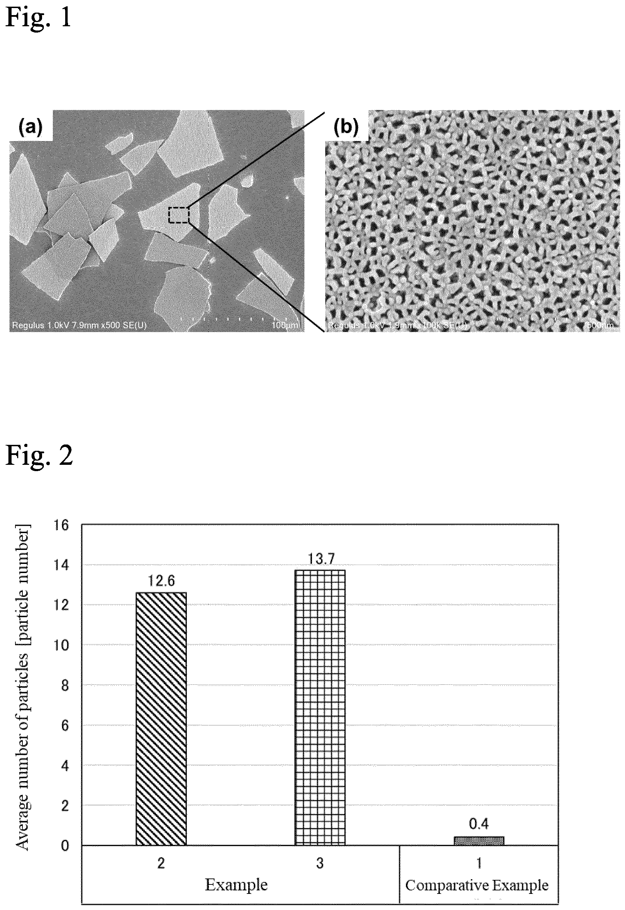

An observation image of the porous silica particles (a) observed by SEM is shown in Fig. 1. In Fig. 1, (a) is an observation image observed at a measurement magnification of 500 times, and (b) is an observation image obtained by observing a portion indicated by a frame in the image (a) at a measurement magnification of 100000 times.

### (Examples 2 to 5)

A PET piece (polyester resin composition) was prepared by mixing the PET piece of Example 1 with the polyester A and, if necessary, the polyester B at the composition shown in Table 1, and kneading the mixture at 280°C and 50 rpm for 10 minutes under nitrogen. In Examples 2 to 5, kneading was performed for 20 minutes in total.

Thereafter, a biaxially stretched polyester film was obtained in the same manner as in Example 1.

### (Comparative Example 1)

Using a plastograph (manufactured by Toyo Seiki Seisaku-sho Co., Ltd., Labo Plastomill 4C 150), 100% by mass of the polyester A was kneaded under nitrogen at 280°C and 50 rpm for 20 minutes to prepare a PET piece (polyester resin composition).

Thereafter, a biaxially stretched polyester film was obtained in the same manner as in Example 1.

**Table 1**

| | | | Example | | | | | Comparative Example |
|---|---|---|---|---|---|---|---|---|
| | | | 1 | 2 | 3 | 4 | 5 | 1 |
| Composition | Porous silica particles (a) | % by mass | 0.5 | 0 | 0 | 0 | 0 | 0 |
| | Polyester A | | 99.50 | 99.20 | 89.20 | 99.95 | 89.95 | 100 |
| | PET piece of Example 1 | | 0 | 0.80 | 0.80 | 0.05 | 0.05 | 0 |
| | Polyester B | | 0 | 0 | 10 | 0 | 10 | 0 |
| Content | Porous silica particles (a) | ppm | 5000 | 40 | 40 | 2.5 | 2.5 | 0 |
| Kneading | Temperature | °C | 280 | 280 | 280 | 280 | 280 | 280 |
| | Total time | min. | 10 | 20 | 20 | 20 | 20 | 20 |

**Table 2**

| | | | Example | | | | | Comparative Example |
|---|---|---|---|---|---|---|---|---|
| | | | 1 | 2 | 3 | 4 | 5 | 1 |
| Added particles | Porous silica particles (a) (Chemical tag) | ppm | 5000 | 40 | 40 | 2.5 | 2.5 | 0 |
| | Silica particles (b)* | ppm | 0 | 0 | 200 | 0 | 200 | 0 |
| Film | Haze | % | 53.1 | 2.5 | 2.5 | 0.9 | 7.9 | 4.3 |
| | Thickness | µm | 75 | 54 | 50 | 56 | 46 | 39 |

| | | | | | | | | |
|---|---|---|---|---|---|---|---|---|
| *Silica particles (b): particles not having pores | | | | | | | | |

The porous silica particles (a) in the films of Examples 2 to 5 and Comparative Example 1 were observed.

In the films of Examples 2 to 5 and Comparative Example 1, the porous silica particles (a) (TruTags (Type 2)) could not be recognized and identified with the naked eye under nonillumination conditions.

However, when observed using TruTag acquisition software, TruTags (Type 2) could be identified as green particles under illumination conditions.

Next, the average number of particles detected from the films of Examples 2 and 3 and Comparative Example 1 was calculated, and tag capability evaluation was performed. The evaluation results are shown in Table 3 and Fig. 2. Fig. 2 is a graph showing the results of Table 3.

**Table 3**

| | | Example | | Comparative Example |
|---|---|---|---|---|
| | | 2 | 3 | 1 |
| Average number of particles | particle number | 12.6 | 13.7 | 0.4 |
| Tag capabiliity | - | A | A | X |

In Table 3 and Fig. 2, the reason why the average number of particles of Comparative Example 1 was not 0 is due to noise, which can be removed by a filter or the like during image processing.

In Examples, virgin raw materials were used as polyester raw materials. However, even when regenerated raw materials are used, tag capability can be exhibited in the same manner as in Examples (in the case of virgin raw materials) because the working principle is the same.

### Industrial Applicability

According to the first aspect of the present invention, by containing a chemical tag in which article information is contained therein, it is possible to obtain a recycled plastic film that can be authenticated, identified, and tracked by the contained article information.

As described above, since the present recycled film contains a chemical tag having a wavelength spectrum profile that can be identified in association with article information of a plastic film, such as manufacturer information and the configuration, composition, and use of a product, the product can be authenticated or identified.

Therefore, when the present recycled films are collected and recycled again, the article information can be utilized, for example, to sort the recycled films for each product.

In addition, since the present recycled film contains the chemical tag, the flow of plastic products such as plastic films can be tracked and grasped.

As described above, by producing a recycled plastic film containing a chemical tag having a wavelength spectrum profile that can be identified in association with article information of a plastic film, applications such as unitary management of the amount used by customers and end users and the amount collected from customers and end users can be expected, and it can be said that the plastic film is suitable for repeated recycling.

According to the second aspect of the present invention, by containing the porous silica particles (a) having a pore diameter in a specific range, it is possible to obtain a polyester resin composition capable of producing a polyester film which has no problem in practical use while maintaining the basic properties of the film, and which is particularly suitable for recycling and can be authenticated and identified.

As described above, by using silica particles, which are generally used in the field of polyester films, as the compound capable of being authenticated and identified, it is possible to provide a polyester resin composition capable of producing a polyester film having no problem in practical use while maintaining the basic properties of the film.

In addition, since a polyester product, for example, a polyester film, in which the present resin composition is used as a raw material contains the porous silica particles (a) having a pore diameter in a specific range, the polyester resin composition can be expected to be applied to authentication and identification when the polyester film is collected and recycled, and it can be said that the polyester resin composition is suitable for recycling.

## Claims

1. A recycled plastic film comprising a chemical tag, wherein the chemical tag has a wavelength spectral profile that can be identified in association with article information of the recycled plastic film.

2. The recycled plastic film according to claim 1, wherein the article information includes manufacturer information.

3. The recycled plastic film according to claim 1 or 2, wherein the chemical tag contains porous silica particles (a) having pores with a diameter of a nanometer unit.

4. The recycled plastic film according to claim 3, wherein the porous silica particles (a) are readable using an optical spectroscopic reader.

5. The recycled plastic film according to claim 3 or 4, wherein the porous silica particles (a) include at least one selected from the group consisting of the following (a1) to (a3):
(a1) porous silica particles having micropores with a pore diameter of 0.001 nm or more and less than 2 nm;
(a2) porous silica particles having mesopores with a pore diameter of 2 nm or more and 50 nm or less; and
(a3) porous silica particles having macropores with a pore diameter of more than 50 nm and 1000 nm or less.

6. The recycled plastic film according to any one of claims 3 to 5, wherein the porous silica particles (a) have an average particle diameter of 10 to 150 µm.

7. The recycled plastic film according to any one of claims 3 to 6, wherein a content of the porous silica particles (a) is 2 to 6000 ppm.

8. The recycled plastic film according to any one of claims 1 to 7, comprising particles (b) other than porous silica particles.

9. The recycled plastic film according to claim 8, wherein the particles (b) are inorganic particles and/or organic particles.

10. The recycled plastic film according to claim 8 or 9, wherein the particles (b) have an average particle diameter of 0.01 to 5 µm.

11. The recycled plastic film according to any one of claims 1 to 10, wherein the recycled plastic film comprises a polyester.

12. The recycled plastic film according to any one of claims 1 to 11, wherein the film is stretched in at least one direction.

13. Use of a plastic film comprising a chemical tag as a recycled raw material, wherein the chemical tag has a wavelength spectrum profile that can be identified in association with article information of the plastic film.

14. The use according to claim 13, wherein the article information includes manufacturer information.

15. The use according to claim 13 or 14, wherein the chemical tag contains porous silica particles (a) having pores with a diameter of a nanometer unit.

16. The use according to claim 15, wherein the porous silica particles (a) are readable using an optical spectroscopic reader.

17. The use according to claim 15 or 16, wherein the porous silica particles (a) include at least one selected from the group consisting of the following (a1) to (a3):
(a1) porous silica particles having micropores with a pore diameter of 0.001 nm or more and less than 2 nm;
(a2) porous silica particles having mesopores with a pore diameter of 2 nm or more and 50 nm or less; and
(a3) porous silica particles having macropores with a pore diameter of more than 50 nm and 1000 nm or less.

18. The use according to any one of claims 15 to 17, wherein the porous silica particles (a) have an average particle diameter of 10 to 150 µm.

19. The use according to any one of claims 15 to 18, wherein a content of the porous silica particles (a) is 2 to 6000 ppm.

20. The use according to any one of claims 13 to 19, wherein the plastic film comprises particles (b) other than porous silica particles.

21. The use according to claim 20, wherein the particles (b) are inorganic particles and/or organic particles.

22. The use according to claim 20 or 21, wherein the particles (b) have an average particle diameter of 0.01 to 5 µm.

23. The use according to any one of claims 13 to 22, wherein the plastic film comprises a polyester.

24. The use according to any one of claims 13 to 23, wherein the plastic film is stretched in at least one direction.

25. A plastic film for a recycled raw material, comprising a chemical tag, wherein the chemical tag has a wavelength spectral profile that can be identified in association with article information of the plastic film.

26. The plastic film for a recycled raw material according to claim 25, wherein the article information includes manufacturer information.

27. The plastic film for a recycled raw material according to claim 25 or 26, wherein the chemical tag contains porous silica particles (a) having pores with a diameter of a nanometer unit.

28. The plastic film for a recycled raw material according to claim 27, wherein the porous silica particles (a) are readable using an optical spectroscopic reader.

29. The plastic film for a recycled raw material according to claim 27 or 28, wherein the porous silica particles (a) include at least one selected from the group consisting of the following (a1) to (a3):
(a1) porous silica particles having micropores with a pore diameter of 0.001 nm or more and less than 2 nm;
(a2) porous silica particles having mesopores with a pore diameter of 2 nm or more and 50 nm or less; and
(a3) porous silica particles having macropores with a pore diameter of more than 50 nm and 1000 nm or less.

30. The plastic film for a recycled raw material according to any one of claims 27 to 29, wherein the porous silica particles (a) have an average particle diameter of 10 to 150 µm.

31. The plastic film for a recycled raw material according to any one of claims 27 to 30, wherein a content of the porous silica particles (a) is 2 to 6000 ppm.

32. The plastic film for a recycled raw material according to any one of claims 25 to 31, comprising particles (b) other than porous silica particles.

33. The plastic film for a recycled raw material according to claim 32, wherein the particles (b) are inorganic particles and/or organic particles.

34. The plastic film for a recycled raw material according to claim 32 or 33, wherein the particles (b) have an average particle diameter of 0.01 to 5 µm.

35. The plastic film for a recycled raw material according to any one of claims 25 to 34, wherein the plastic film comprises a polyester.

36. The plastic film for a recycled raw material according to any one of claims 25 to 35, wherein the film is stretched in at least one direction.

37. A recycled plastic film obtained from the the plastic film for a recycled raw material according to any one of claims 25 to 36.

38. A method for producing a recycled plastic film, comprising:
a preparation step of preparing a plastic film containing a chemical tag; and
a regeneration step of producing a recycled plastic film,
wherein the chemical tag has a wavelength spectral profile that can be identified in association with article information of the plastic film, and wherein in the regeneration step, the article information is utilized.

39. The method for producing a recycled plastic film according to claim 38, wherein the regeneration step has a product sorting step utilizing the article information.

40. The method for producing a recycled plastic film according to claim 38 or 39, wherein the article information includes manufacturer information.

41. The method for producing a recycled plastic film according to any one of claims 38 to 40, wherein the chemical tag contains porous silica particles (a) having pores with a diameter of a nanometer unit.

42. The method for producing a recycled plastic film according to claim 41, wherein in the regeneration step, the porous silica particles (a) are read using an optical spectroscopic reader, and the plastic film containing the porous silica particles (a) is sorted.

43. The method for producing a recycled plastic film according to claim 41 or 42, wherein the porous silica particles (a) include at least one selected from the group consisting of the following (a1) to (a3):
(a1) porous silica particles having micropores with a pore diameter of 0.001 nm or more and less than 2 nm;
(a2) porous silica particles having mesopores with a pore diameter of 2 nm or more and 50 nm or less; and
(a3) porous silica particles having macropores with a pore diameter of more than 50 nm and 1000 nm or less.

44. The method for producing a recycled plastic film according to any one of claims 41 to 43, wherein the porous silica particles (a) have an average particle diameter of 10 to 150 µm.

45. The method for producing a recycled plastic film according to any one of claims 41 to 44, wherein a content of the porous silica particles (a) is 2 to 6000 ppm.

46. The method for producing a recycled plastic film according to any one of claims 38 to 45, wherein the plastic film comprises particles (b) other than porous silica particles.

47. The method for producing a recycled plastic film according to claim 46, wherein the particles (b) are inorganic particles and/or organic particles.

48. The method for producing a recycled plastic film according to claim 46 or 47, wherein the particles (b) have an average particle diameter of 0.01 to 5 µm.

49. The method for producing a recycled plastic film according to any one of claims 38 to 48, wherein the plastic film comprises a polyester.

50. The method for producing a recycled plastic film according to any one of claims 38 to 49, wherein the plastic film is stretched in at least one direction.
